# FASCICULE DE BREVET EUROPEEN

(11) **EP 1 369 577 B1**
(45) Date de publication et mention de la délivrance du brevet: **31.08.2005**
(21) Numéro de dépôt: 03291339.4
(22) Date de dépôt: 04.06.2003
(51) Int. Cl.: F02M 35/12, B60H 1/00

(54) **Dispositif d'atténuation des bruits sur un circuit d'admission d'air pour moteur de préférence suralimenté ou appareil de climatisation et circuit d'admission équipé d'un tel dispositif**
Luftansaugdämpfungsanlage, insbesondere für aufgeladene Brennkraftmaschinen oder Klimaanlage, und Ansaugkanal mit solch einer Anlage
Air intake silencing device especially for turbocharged engines or air conditioner and intake circuit with such a device

(30) Priorité: 07.06.2002 FR 0206992
(43) Date de publication de la demande: 10.12.2003
(73) Titulaire: Trelleborg Fluid Systems Geie, 44470 Carquefou (FR)
(72) Inventeur: Coulon, Jean-Michel, 44000 Nantes (FR)
(74) Mandataire: Fosse, Danièle

(56) Documents cités:
- EP-A- 1 085 200
- DE-A- 19 956 165
- US-A- 2 014 368
- US-A- 4 874 062
- PATENT ABSTRACTS OF JAPAN vol. 016, no. 181 (M-1242), 30 avril 1992 (1992-04-30) & JP 04 019314 A (NISSAN MOTOR CO LTD), 23 janvier 1992 (1992-01-23)

## Description

La présente invention concerne un dispositif d'atténuation des bruits, de préférence haute fréquence, sur un circuit d'admission d'air pour moteur à combustion, de préférence suralimenté, ou appareil de climatisation, ces bruits étant notamment issus du fonctionnement du turbo compresseur et/ou du moteur et/ou de l'appareil de climatisation du véhicule, ainsi qu'un circuit d'admission d'air équipé d'un tel dispositif d'atténuation.

Les problèmes d'insonorisation sur le circuit d'admission d'air des moteurs à combustion interne sont de deux types. Sur tous les moteurs, il existe une composante acoustique basse fréquence 20 Hz à 1000 Hz générée par l'ouverture et la fermeture périodique des soupapes. Elle se propage et rayonne à l'entrée du circuit d'air. Sur les moteurs suralimentés, il existe en outre une composante acoustique haute fréquence de 1000 Hz à 4000 Hz générée par le turbo compresseur. Cette composante se propage et rayonne également à travers les conduits et à l'entrée d'air. Un problème similaire est constaté en ce qui concerne les bruits issus du fonctionnement de l'appareil de climatisation susceptible d'équiper un tel véhicule.

Afin d'atténuer ces bruits sur une bande de fréquence donnée, des résonateurs ou des chambres acoustiques disposés en série le long du conduit d'admission d'air sont très utilisés. Ils sont réalisés à partir d'une coquille externe comprenant plusieurs cavités qui sont intégrées autour du conduit, lui-même muni d'orifices permettant de réaliser le couplage entre le fluide et les cavités. Ces pièces sont réalisées en métal par sertissage et soudure ou en injection plastique. Un exemple de réalisation d'une telle construction est notamment fourni par les brevets allemands DE-19956165 ou DE-19956172. Du fait que les cavités sont séparées de manière étanche le long du conduit du circuit, le principal handicap de ce principe est de pouvoir maîtriser l'étanchéité entre les cavités. La maîtrise de cette étanchéité nécessite en général des inserts ou des opérations de soudure ou de sertissage complémentaires. Il en résulte une fabrication complexe de tels dispositifs d'atténuation. Il est à noter que cette étanchéité est indispensable pour ne pas nuire aux performances du turbocompresseur ou du moteur.

Une autre solution consiste à disposer les chambres non plus les unes à la suite des autre sur le conduit du circuit d'admission d'air mais les unes autour des autres. Chaque chambre est alors formée d'une portion de conduit débouchant dans une autre chambre délimitée au moyen d'un conduit s'étendant à recouvrement partiel sur le conduit de la chambre qui l'entoure. Il en résulte une construction étagée créant une perturbation importante de l'écoulement du flux. Une telle solution, décrite en particulier dans le brevet DE-19956166, n'est donc pas satisfaisante.

Le document européen EP-A-1.085.200 décrit quant à lui un dispositif d'atténuation des bruits constitué d'une série de chambres annulaires disposées les unes à la suite des autres autour d'une section de conduit intégrée au circuit d'admission d'air. Le conduit d'admission d'air est muni d'orifices équipés chacun d'un col débouchant dans une chambre annulaire pour établir une communication de flux d'air entre conduit et chambres. Ces chambres, délimitées par un conduit externe au conduit d'admission d'air, sont, par ailleurs, éventuellement cloisonnées, par l'intermédiaire de parois radiales. Ces deux conduits sont animés d'un déplacement relatif l'un par rapport à l'autre pour permettre une variation du volume des chambres. En conséquence, un débit de fuite permanent est rapidement créé au niveau des extrémités de l'élément délimitant les chambres annulaires dans sa zone de liaison au conduit d'admission d'air, y compris en présence de joints. En outre, en raison de la conception retenue, les conduits occupent l'un par rapport à l'autre des positions variables de telle sorte que lorsqu'un espace annulaire est éventuellement créé entre les deux conduits, la section de cet espace annulaire varie en fonction de la position relative des conduits rendant difficile la mesure du débit d'air s'écoulant à travers ce passage annulaire. Enfin, la présence de nombreux cloisonnements induit des perturbations au niveau de l'écoulement d'air.

On connaît par ailleurs à travers le document US-A-2.014.368 un dispositif d'atténuation des bruits dans lequel la structure du conduit extérieur est formée par enroulement d'une bande en S, le chevauchement partiel desdites bandes d'une spire à une autre permettant de générer une série de chambres. Cet enroulement, à partir d'une bande en S, a pour objectif d'obtenir une structure tubulaire dont la paroi est formée de bandes pouvant être animées d'un déplacement relatif assurant l'effet d'atténuation des bruits comme l'illustre en particulier le passage page 1 - colonne 2 - lignes 10 à 20 de ce document. Il est donc impératif, pour obtenir cet effet de "respiration" du conduit, qu'au moins une des extrémités de ce conduit, qui se comporte comme un accordéon, soit maintenue libre. En conséquence, un tel dispositif engendre nécessairement un échappement d'air dans l'atmosphère. Par ailleurs, lorsque ce conduit en accordéon entoure un conduit perforé, rien ne permet un centrage du conduit perforé à l'intérieur du conduit accordéon. A nouveau, il en résulte que, si un passage annulaire peut être créé entre ces deux éléments, la section de passage de ce passage annulaire n'est absolument pas contrôlée.

Enfin, on connaît à travers l'abrégé du document japonais JP 04 19 314 un dispositif d'atténuation des bruits constitué d'un conduit d'admission d'air équipé de deux branches radiales débouchant chacune dans des chambres disposées parallèlement audit conduit. Ces chambres sont elles-mêmes reliées l'une à l'autre par un clapet à ouverture commandée par un capteur de vitesse du moteur. Cette solution présente l'inconvénient d'être extrêmement encombrante car elle nécessite de disposer d'une part de l'espace nécessaire au passage du conduit d'admission en air, d'autre part au volume des chambres.

Un but de la présente invention est donc de proposer un dispositif d'atténuation des bruits du type constitué d'une série de chambres annulaires disposées les unes à la suite des autres autour d'une section de conduit intégrée ou intégrable au circuit d'admission d'air, ces chambres communiquant avec le conduit par des orifices pour établir une communication du flux d'air entre conduit et chambres, la conception de ce dispositif permettant d'une part un assemblage aisé des éléments constitutifs du dispositif entre eux, d'autre part une amélioration de la performance acoustique en raison d'une absence de saturation acoustique des ouvertures entre conduit et chambres, cette saturation se produisant en écoulement rasant.

Un autre but de la présente invention est de proposer un dispositif d'atténuation des bruits dont la conception permet, afin de ne pas nuire aux performances du moteur ou du turbocompresseur, d'éviter tout échappement dans l'atmosphère de l'air circulant à l'intérieur du circuit d'admission d'air sans augmenter de manière importante le nombre de liaisons étanches à effectuer.

Un autre but de la présente invention est de proposer un dispositif d'atténuation des bruits dont la conception permet de maîtriser parfaitement l'écoulement de l'air en organisant un débit de fuite à l'intérieur du dispositif.

A cet effet, l'invention a pour objet un dispositif d'atténuation des bruits, de préférence haute fréquence, sur un circuit d'admission d'air pour moteur à combustion interne, de préférence suralimenté ou appareil de climatisation, ces bruits étant notamment issus du fonctionnement du turbo compresseur et/ou du moteur et/ou de l'appareil de climatisation du véhicule, ce dispositif étant constitué d'une série de chambres annulaires disposées les unes à la suite des autres autour d'une section de conduit intégrée ou intégrable audit circuit d'admission d'air, ces chambres communiquant avec le conduit par des orifices pour établir une communication du flux d'air entre conduit et chambres, les cavités des chambres étant couplées par un passage annulaire disposé entre les chambres et autour du conduit d'admission de manière telle que le surplus de flux d'alimentation d'une chambre (6) s'écoule en direction de la chambre suivante caractérisé en ce que les chambres sont délimitées au moyen d'un conduit externe et coaxial au conduit d'admission d'air, ce conduit présentant des constrictions servant à la délimitation du volume des chambres et des passages annulaires, ce conduit étant réalisé sous forme d'un élément tubulaire monobloc, généralement monopariétal, apte à être enfilé sur le conduit d'admission d'air, ledit conduit étant solidarisé de manière étanche à chacune de ses extrémités au conduit d'admission d'air et permettant le couplage des cavités des chambres par un passage annulaire permanent calibré.

Grâce à la présence d'un passage annulaire permanent tendant à guider l'air devant s'écouler plutôt que d'empêcher son écoulement, il en résulte l'absence de nécessité de créer des liaisons étanches entre les chambres. Le calibrage du passage permet d'obtenir un débit de fuite parfaitement contrôlé dont l'incidence sur l'atténuation des bruits est ainsi parfaitement maîtrisée. L'existence permanente de ce passage et le maintien assuré de ce passage à l'état ouvert permettent d'éviter toute saturation des orifices du circuit d'admission d'air. Enfin, malgré la création de ce débit de fuite en interne à l'intérieur du dispositif, la conception de ce dispositif permet de ne générer aucun échappement d'air dans l'atmosphère.

Le dispositif d'atténuation des bruits, objet de l'invention, est ainsi constitué d'un conduit insonorisé à l'aide de résonateurs disposés en série le long d'un conduit mais dont les cavités sont couplées entre elles. Du fait que les cavités ne sont plus séparées de façon étanche mais couplées, les inconvénients inhérents à la fabrication de tels dispositifs lorsqu'une étanchéité était souhaitée mais couplées, les inconvénients inhérents à la fabrication de tels dispositifs lorsqu'une étanchéité était souhaitée disparaissent. Parallèlement, on constate une amélioration de la performance acoustique. En effet, du fait que les cavités sont couplées, une partie de l'écoulement va traverser les ouvertures entre conduit d'admission d'air et chambres ainsi que le passage calibré entre lesdites chambres. Ce phénomène permet d'éviter la saturation des ouvertures qui se produit en écoulement rasant, notamment dans le cas d'un mode de réalisation conforme à celui décrit dans les brevets allemands DE-19956165 ou DE-19956172.

Selon une forme de réalisation préférée de l'invention, les chambres annulaires disposées autour de la section du conduit d'admission d'air sont des chambres stationnaires par rapport audit conduit. Ce chambres sont délimitées au moyen d'un conduit externe au conduit d'admission d'air et entourant le conduit d'admission d'air, ce conduit externe étant solidarisé de manière étanche à chacune de ses extrémités au conduit d'admission d'air. Ainsi, la fixation du conduit externe sur le conduit d'admission d'air et son maintien en position grâce à une liaison étanche permettent d'une part de garantir une section de passage prédéterminée entre lesdits conduits, d'autre part l'absence d'échappement d'air dans l'atmosphère. Une telle réalisation permet donc d'obtenir une section de passage maintenue sensiblement constante dudit passage annulaire sur l'ensemble de son pourtour. Enfin, l'immobilisation des deux conduits l'un par rapport à l'autre permet de garantir le maintien d'un passage constamment ouvert.

L'invention a encore pour objet un circuit d'admission d'air pour moteur de préférence suralimenté ou appareil de climatisation du type équipé d'un dispositif d'atténuation des bruits de préférence haute fréquence, ces bruits étant notamment issus du fonctionnement du turbo compresseur et/ou du moteur et/ou de l'appareil de climatisation du véhicule, ce dispositif étant constitué d'une série de chambres annulaires disposées les unes à la suite des autres autour d'une section de conduit intégrée ou intégrable audit circuit d'admission d'air, ces chambres communiquant avec le conduit par des orifices pour établir une communication du flux d'air entre conduit et chambre, caractérisé en ce que le dispositif d'atténuation du circuit est du type précité.

L'invention sera bien comprise à la lecture de la description suivante d'exemples de réalisation, en référence aux dessins annexés dans lesquels :
la figure 1 représente de manière schématique un circuit d'admission d'air pour moteur à combustion interne équipé d'un turbot compresseur ;
la figure 2 représente une vue schématique en coupe d'un dispositif d'atténuation des bruits haute fréquence conforme à l'invention ;
la figure 3 représente, sous forme d'un graphique présentant en abscisse les fréquences en Hz et en ordonnée la perte par transmission ou atténuation exprimée en dB, la réponse acoustique de deux dispositifs d'atténuation des bruits, l'une représentée avec un trait carré/ligne correspondant à un dispositif conforme à l'invention, l'autre représentée en trait plein correspondant à un dispositif d'atténuation conforme à l'état de la technique pour un écoulement à Mach égal à 0,2 et
la figure 4 représente, sous forme d'un graphique, l'incidence d'un écoulement rasant sur la performance d'un dispositif d'atténuation de l'état de la technique constitué de deux chambres séparées de manière étanche en fonction du nombre de Mach de l'écoulement.

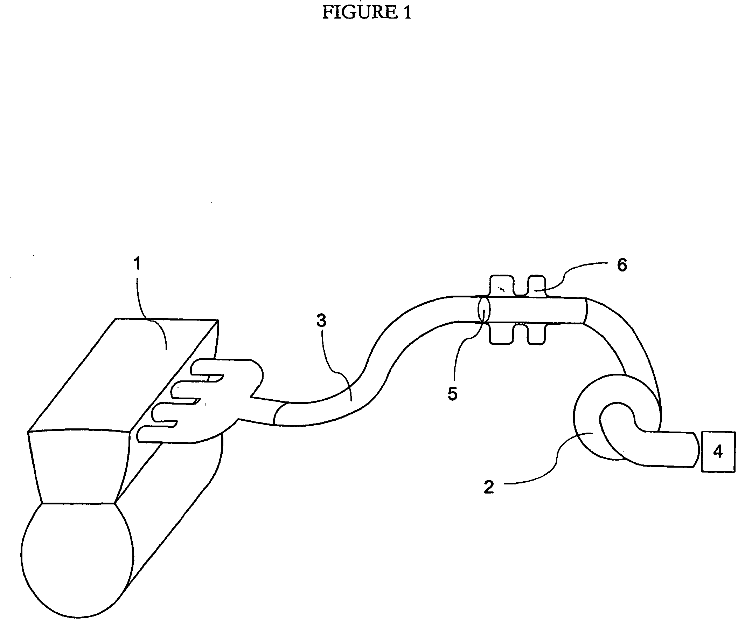

Comme mentionné ci-dessus, le dispositif d'atténuation, objet de l'invention, est plus particulièrement destiné à atténuer, sur un circuit d'admission d'air, des bruits haute fréquence, c'est-à-dire situés dans des plages de fréquences s'étendant de 1000 Hz à 4000 Hz bien qu'il puisse s'appliquer à toute plage de fréquences. Ce circuit peut constituer le circuit d'admission d'air d'un moteur à combustion interne suralimenté ou non ou d'un appareil de climatisation. La figure 1 illustre un circuit d'admission d'air pour moteur à combustion interne équipé d'un turbocompresseur. Ce circuit, tel que représenté à la figure 1, comporte un moteur 1, un turbocompresseur 2 et un conduit 3 d'admission d'air s'étendant depuis une entrée 4 d'air frais jusqu'au moteur 1. Une section 5 de ce conduit 3 d'admission d'air est aménagée pour être équipée d'un dispositif d'atténuation des bruits conforme à l'invention.

Ce dispositif d'atténuation des bruits peut être disposé en amont ou en aval du turbocompresseur. De préférence, ce dispositif sera disposé entre turbocompresseur 2 et moteur 1. Du fait de sa position, il est indispensable qu'un tel dispositif ne génère pas un échappement d'air hors du circuit, un tel courant de fuite pouvant avoir des conséquences néfastes sur les performances du turbo ou du moteur.

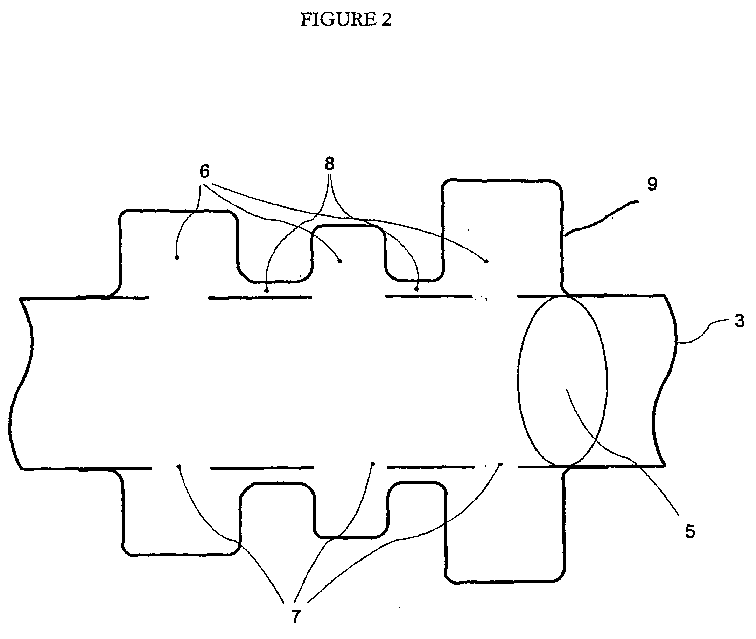

Ce dispositif d'atténuation des bruits est constitué d'une série de chambres 6 annulaires disposées les unes à la suite des autres autour de la section 5 de conduit 3 intégrée ou intégrable audit circuit d'admission d'air. Comme l'illustre la figure 2, ces chambres 6 sont des chambres stationnaires qui communiquent avec le conduit 3 par des orifices 7 pour établir une communication du flux d'air entre conduit 3 et chambres 6. De manière caractéristique à l'invention, les cavités des chambres 6 sont couplées par un passage 8 annulaire permanent calibré disposé entre les chambres 6 et autour du conduit 3 ou en particulier de la section 5 du conduit 3 d'admission de manière telle que le surplus de flux d'alimentation d'une chambre 6 s'écoule en direction de la chambre 6 suivante.

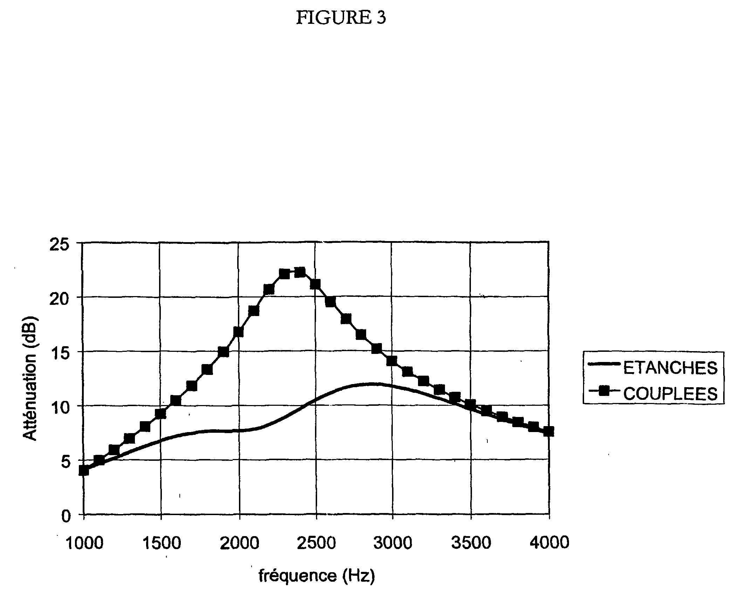

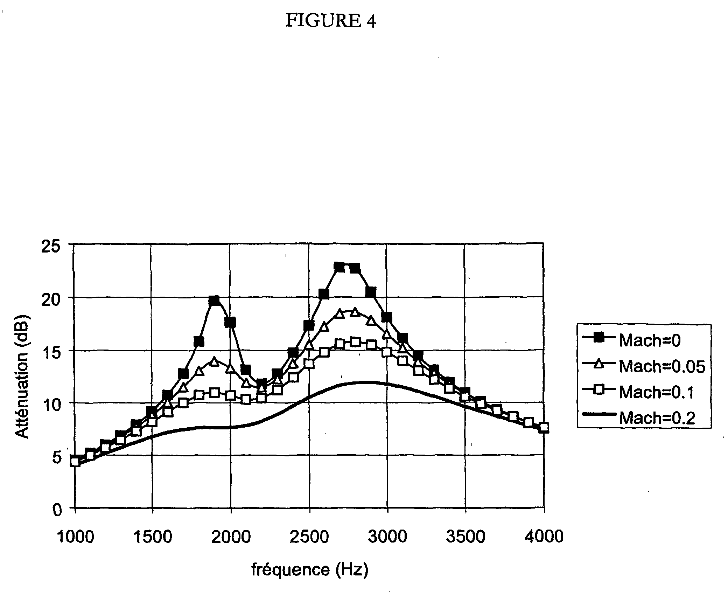

L'absence d'une liaison étanche entre deux chambres facilite d'une part la fabrication et la réalisation d'un tel dispositif en augmentant les tolérances de fabrication admissibles et permet d'autre part d'éviter une saturation des orifices 7. En effet, un tel conduit 3 d'admission d'air est parcouru par un écoulement relativement important en sortie du turbocompresseur 2 (Mach supérieur à 0,1). La présence d'un écoulement rasant affecte de façon importante l'impédance des orifices 7 connectant le conduit 3 aux cavités des chambres 6 et par suite la performance acoustique des résonateurs. Ainsi, comme l'illustre la figure 3, où la courbe en pointillé représente un dispositif conforme à l'invention alors que la courbe en trait plein représente un dispositif d'atténuation des bruits conforme à l'état de la technique dans lequel les chambres sont reliées de manière étanche entre elles et ne peuvent communiquer que par l'intermédiaire du conduit d'admission d'air, on constate très nettement que la réponse acoustique est modifiée permettant une transparence acoustique à l'intérieur d'une plage de fréquences prédéterminée dans le cas d'un dispositif d'atténuation conforme l'invention, transparence acoustique qui n'est pas constatée dans le cas d'un dispositif d'atténuation conforme à l'état de la technique. La figure 4 confirme cette analyse. Cette figure 4 représente un dispositif d'atténuation de l'état de la technique, ce dispositif d'atténuation étant constitué de deux chambres disposées en série, reliées de manière étanche entre elles et calées l'une à 1900 Hz, l'autre à 2750 Hz en fonction du nombre de Mach de l'écoulement. La courbe correspondant à Mach égal à 0 est représentée en pointillés. On constate ainsi qu'à Mach égal à 0,2, les ouvertures sont saturées altérant ainsi les performances acoustiques du dispositif d'atténuation. La suppression d'une liaison étanche entre les cavités des chambres disposées en série permet donc d'améliorer de manière importante la performance acoustique indépendamment de la vitesse d'écoulement du flux à l'intérieur du circuit d'admission d'air.

Dans un mode de réalisation préféré de l'invention, les chambres 6 sont délimitées au moyen d'un conduit 9 externe et coaxial au conduit 3 d'admission d'air, ce conduit présentant des constrictions servant à la délimitation du volume des chambres 6 et des passages 8 annulaires. Ce conduit 9 est solidarisé de manière étanche à chacune de ses extrémités au conduit 3 d'admission d'air. Grâce à la conception des orifices 7 du conduit 3 d'admission d'air, ces orifices 7 étant réalisés par simple perçage du conduit de manière à ne présenter aucune portion en saillie radiale à l'extérieur du conduit 3, il en résulte la possibilité de simplement enfiler le conduit 9 externe sur la section 3 de conduit avant de solidariser les extrémités de ce conduit 9 au conduit 3 par une liaison étanche, telle qu'une soudure. Le montage s'avère donc extrêmement simple. Le conduit 9 peut ainsi se présenter sous forme d'un élément tubulaire monopariétal monobloc et non sous forme de deux demi-coquilles, ce qui compliquerait la construction et obligerait à une soudure étanche supplémentaire des demi-coquilles. Généralement, les constrictions du conduit 9 sont réalisées par hydro-formage du conduit 9 qui se présente sous forme d'un élément tubulaire monopariétal. Une fois les conduits 3 et 9 solidarisés l'un à l'autre par une liaison étanche, en particulier par une soudure étanche des extrémités du conduit 9 au conduit 3, le conduit 9 est maintenu stationnaire par rapport au conduit 3 de telle sorte que les passages 8 annulaires délimités entre les deux conduits sont des passages calibrés de section prédéterminée. Ces passages sont maintenus en permanence ouvert.

Un tel dispositif peut être réalisé en métal ou en matière de synthèse. Ainsi, les cavités des chambres 6 sont couplées du fait que la section intérieure des constrictions du conduit 9 externe est supérieure à la section extérieure du conduit 3 du circuit d'admission d'air.

Les paramètres à prendre en considération pour la réalisation d'un tel dispositif sont le nombre et le volume des cavités, le nombre et le diamètre des ouvertures 7 réalisées sur le conduit 3 ainsi que la section et la longueur du conduit de couplage ou passage 8 entre les cavités. L'homme du métier sera à même, en fonction de ces paramètres, d'adapter au mieux la performance acoustique d'un tel dispositif d'atténuation. Il en résulte un dispositif d'atténuation dont la fabrication est simplifiée tandis que la performance acoustique est améliorée en particulier pour des écoulements à Mach supérieur à 0,1.

Un tel dispositif d'atténuation peut être adapté sur un circuit d'admission d'air sous forme d'une pièce rapportée ou être installé en première monte sur ledit circuit sans sortir du cadre de l'invention.

## Revendications

1. Dispositif d'atténuation des bruits, de préférence haute fréquence, sur un circuit d'admission d'air pour moteur (1) à combustion interne de préférence suralimenté ou appareil de climatisation, ces bruits étant notamment issus du fonctionnement du turbo compresseur (2) et/ou du moteur (1) et/ou de l'appareil de climatisation du véhicule, ce dispositif étant constitué d'une série de chambres (6) annulaires disposées les unes à la suite des autres autour d'une section (5) de conduit (3) intégrée ou intégrable audit circuit d'admission d'air, ces chambres (6) communiquant avec le conduit (3) par des orifices (7) pour établir une communication du flux d'air entre conduit (3) et chambres (6), les cavités des chambres (6) étant couplées par un passage (8) annulaire disposé entre les chambres (6) et autour du conduit (3) d'admission de manière telle que le surplus de flux d'alimentation d'une chambre (6) s'écoule en direction de la chambre (6) suivante, et
les chambres (6) sont délimitées au moyen d'un conduit (9) externe et coaxial au conduit (3) d'admission d'air, ce conduit (9) présentant des constrictions servant à la délimitation du volume des chambres (6) et des passages (8) annulaires, ce conduit (9) étant réalisé sous forme d'un élément tubulaire monobloc, généralement monopariétal, apte à être enfilé sur le conduit (3) d'admission d'air, **caraterisé en ce que** ledit conduit (9) étant solidarisé de manière étanche à chacune de ses extrémités au conduit (3) d'admission d'air et permettant le couplage des cavités des chambres (6) par un passage (8) annulaire permanent calibré.

2. Dispositif selon la revendication 1,
**caractérisé en ce que** les chambres (6) sont des chambres stationnaires.

3. Dispositif selon la revendication 2,
**caractérisé en ce que** le conduit (9) externe est fixé au conduit (3) d'admission d'air par soudure étanche de ses extrémités.

4. Dispositif selon l'une des revendications 1 à 3,
**caractérisé en ce que** les constrictions du conduit (9) sont formées par hydroformage.

5. Circuit d'admission d'air pour moteur (1) de préférence suralimenté ou appareil de climatisation du type équipé d'un dispositif d'atténuation des bruits de préférence haute fréquence, ces bruits étant notamment issus du fonctionnement du turbo compresseur (2) et/ou du moteur (1) et/ou de l'appareil de climatisation du véhicule, ce dispositif étant constitué d'une série de chambres (6) annulaires disposées les unes à la suite des autres autour d'une section (5) de conduit (3) intégrée ou intégrable audit circuit d'admission d'air, ces chambres (6) communiquant avec le conduit (3) par des orifices (7) pour établir une communication du flux d'air entre conduit (3) et chambres (6),
**caractérisé en ce que** le dispositif d'atténuation du circuit est conforme à l'une quelconque des revendications 1 à 4.

## Patentansprüche

1. Anlage zur Dämpfung von vorzugsweise hochfrequenten Geräusche an einem Luftansaugsystem für einen vorzugsweise aufgeladenen Verbrennungsmotor (1) oder eine Klimaanlage, wobei diese Geräusche insbesondere durch den Betrieb des Turboladers (2) und/oder des Motors (1) und/oder der Klimaanlage des Fahrzeugs bedingt sind, wobei diese Anlage durch eine Reihe von ringförmigen Kammern (6) gebildet ist, welche hintereinander um einen Querschnitt (5) einer Leitung (3) angeordnet sind, welcher Querschnitt in dem genannten Luftansaugsystem integriert oder integrierbar ist, wobei diese Kammern (6) mit der Leitung (3) über Öffnungen (7) kommunizieren, um eine Verbindung des Luftflusses zwischen der Leitung (3) und den Kammern (6) herzustellen, wobei die Hohlräume der Kammern (6) durch einen Durchgang (8) gekoppelt sind, welcher ringförmig ausgebildet und zwischen den Kammern (6) und um die Ansaugleitung (3) derart angeordnet ist, dass der Überschuss des Versorgungsflusses einer Kammer (6) in Richtung der folgenden Kammer (6) fließt, und wobei die Kammern (6) mittels einer externen, koaxial zu der Luftansaugleitung (3) angeordneten Leitung (9) begrenzt sind, wobei diese Leitung (9) Einschnürungen aufweist, welche zur Begrenzung des Volumens der Kammern (6) und der ringförmigen Durchgänge (8) dienen, wobei diese Leitung (9) in Form eines rohrförmigen, einstückigen, meist einwandigen Elements realisiert ist, welches geeignet ist, auf der Luftansaugleitung (3) angeordnte zu werden, **dadurch gekennzeichnet, dass** die genannte Leitung (9) an jedem ihrer Enden abgedichtet mit der Luftansaugleitung (3) fest verbunden ist und die Kopplung der Hohlräume der Kammern (6) durch einen kalibrierten permanenten ringförmigen Durchgang (8) ermöglicht.

2. Anläge nach Anspruch 1, **dadurch gekennzeichnet, dass** die Kammern (6) ortsfeste Kammern sind.

3. Anlage nach Anspruch 2, **dadurch gekennzeichnet, dass** die externe Leitung (9) an der Luftänsaugleitung (3) durch eine dichte Schweißung ihrer Enden befestigt ist.

4. Anlage nach einem der Ansprüche 1 bis 3, **dadurch gekennzeichnet, dass** die Einschnürungen der Leitung (9) durch Hydroforming gebildet sind.

5. Luftansaugsystem für einen vorzugsweise aufgeladenen Motor (1) oder eine Klimaanlage, mit einer Anlage zur Dämpfung der vorzugsweise hochfrequenten Geräusche ausgestattet, wobei diese Geräusche insbesondere durch den Betrieb des Turboladers (2) und/oder des Motors (1) und/oder der Klimaanlage des Fahrzeugs bedingt sind, wobei diese Anlage durch eine Reihe von ringförmigen Kammern (6) gebildet ist, welche hintereinander um einen Querschnitt (5) einer Leitung (3) angeordnet sind, welcher Querschnitt in dem genannten Luftansaugsystem integriert oder integrierbar ist, wobei diese Kammern (6) mit der Leitung (3) über Öffnungen (7) kommunizieren, um eine Verbindung des Luftflusses zwischen der Leitung (3) und den Kammern (6) herzustellen, **dadurch gekennzeichnet, dass** die System-Dämpfungsanlage einem der Ansprüche 1 bis 4 entspricht.

## Claims

1. Device for attenuating preferably high-frequency noise on an air intake circuit for an internal-combustion, preferably turbocharged, engine (1) or for an air-conditioning system, this noise being caused, in particular, by the operation of the turbocharger (2) and/or of the engine (1) and/or of the vehicle air-condition system, this device consisting of a series of annular chambers (6) disposed in succession around a section (5) of pipe (3) which is integrated or can be integrated in the said air intake circuit, these chambers (6) communicating with the pipe (3) via orifices (7) in order to establish communication of the air flow between the pipe (3) and the chambers (6), the cavities of the chambers (6) being coupled by an annular leadthrough (8) disposed between the chambers (6) and around the intake pipe (3) in such a way that the surplus intake flow of a chamber (6) flows towards the following chamber (6), and
the chambers (6) are delimited by means of a pipe (9) which is external to and coaxial with the air intake pipe (3), this pipe (9) having constrictions which serve to delimit the volume of the chambers (6) and of the annular leadthroughs (8), this pipe (9) being realized in the form of a single-piece, tubular element, which is generally single-walled and is capable of being placed on the air intake pipe (3), **characterized in that** at each of its ends the said pipe (9) is firmly attached, in a tight-sealed manner, to the inlet air pipe (3), and enables the cavities of the chambers (6) to be coupled via a calibrated, permanent, annular leadthrough (8).

2. Device according to Claim 1,
**characterized in that** the chambers (6) are stationary chambers.

3. Device according to Claim 2,
**characterized in that** the external pipe (9) is fixed to the intake air pipe (3) by tight-sealed welding of its ends.

4. Device according to any one of Claims 1 to 3,
**characterized in that** the constrictions of the pipe (9) are formed by hydroforming.

5. Intake-air circuit for a preferably turbocharged engine (1) or an air-conditioning system, of the type provided with a device for attenuating preferably high-frequency noise, this noise being caused, in particular, by the operation of the turbocharger (2) and/or of the engine (1) and/or of the vehicle air-condition system, this device consisting of a series of annular chambers (6) disposed in succession around a section (5) of pipe (3) which is integrated or can be integrated in the said air intake circuit, these chambers (6) communicating with the pipe (3) via orifices (7) in order to establish communication of the air flow between the pipe (3) and the chambers (6),
**characterized in that** the attenuation device of the circuit is in accordance with any one of Claims 1 to 4.
